(19)

**Europäisches Patentamt**

**European Patent Office**

**Office européen des brevets**

(11) **EP 3 285 351 A1**

(12) **EUROPEAN PATENT APPLICATION**

(43) Date of publication:
**21.02.2018 Bulletin 2018/08**

(21) Application number: **17186162.8**

(22) Date of filing: **14.08.2017**

(51) Int Cl.:
*H02J 3/38* (2006.01)     *H02J 3/28* (2006.01)
*H02J 3/32* (2006.01)     *H02S 10/20* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **12.08.2016   US 201615236076**

(71) Applicant: **Robert Bosch GmbH**
**70442 Stuttgart (DE)**

(72) Inventors:
• **Chen, Fang**
  **Sunnyvale, California 94086 (US)**
• **Ahmed, Jasim**
  **Mountain View, California 94040 (US)**
• **Roy, Binayak**
  **Santa Clara, California 95054 (US)**

(54) **METHODS AND SYSTEMS FOR PROVIDING PHOTOVOLTAIC PLANT POWER FEED-IN**

(57)    A method of controlling a photovoltaic system includes: receiving a forecast of energy generation by the photovoltaic system for a predetermined time period; determining a revenue generation objective function characterizing revenue generated by feeding electrical energy from the photovoltaic system into an energy transmission system; determining constraints on the feed-in of electrical energy into the energy transmission system, at least some of the constraints being a function of the forecast; optimizing the revenue generation objective function as constrained to determine energy feed-in and storage actions; and executing the determined energy feed-in and storage actions. The method, for example, utilizes a simplified revenue generation module including a linear revenue generation objective function and a plurality of linear constraints, which can enable optimization using a mixed integer linear programming approach. The method steps can be performed iteratively, at each of a plurality of predetermined time intervals during the predetermined time period.

**EP 3 285 351 A1**

**Description**

**BACKGROUND INFORMATION**

Photovoltaic power plants generate electric energy from solar energy, and feed the generated electric energy to an electric energy transmission system, often to generate revenue. Photovoltaic power plants and electric energy transmission systems are typically operated by different entities, and the electric energy transmission system is likely to place requirements on the form of the electric energy it receives from the photovoltaic power plant. Such requirements originate from limits of the electric energy transmission system's ability to receive electric energy, energy regulations, market considerations, etc., as well as other factors, and power levels required by the electric energy transmission system may differ substantially from power levels naturally generated by the photovoltaic power plant. Failure of the photovoltaic power plant to fulfil these requirements results in a penalty in the form of a reduction in payment from the electric energy transmission system for the energy feed-in.

Previous efforts to provide greater control over the electric energy fed from energy generation sources to energy transmission systems have include the use of a battery to selectively store energy generated by the energy generation source and then release the stored energy to the energy transmission system. For example, during periods of high energy generation, a portion of the energy generated may be used to charge the battery, and then during periods of low energy generation, the battery may provide stored energy to supplement newly generated energy fed into the energy transmission system.

**SUMMARY**

However, problems have arisen in attempting to realize such systems. Prior approaches have relied upon systems using complex, non-linear equations, which have proven to be time consuming and expensive to operate. Moreover, uncertainty in the power level generated by the energy generation source may greatly decrease the effectiveness of such systems, potentially resulting in penalties and revenue reduction. Additionally, inefficiencies in energy storage may further reduce the margin of error available, as every charging and discharging event may involve its own energy cost.

Therefore, a need exists for improved methods and systems for utilizing energy storage systems to provide photovoltaic and other renewable power plant energy feed-in to energy transmission systems, to reduce complexity and cost while effectively accommodating uncertainties in power generation.

Example embodiments of a method of controlling a photovoltaic energy generation and supply system maximize revenue generated for feeding energy from the photovoltaic system to an energy transmission system in an improved manner by utilizing a revenue generation model that reduces complexity and cost. For example, in an example embodiment, the method composes a revenue generation model having a linear revenue generation objective function and linear constraints based on an energy generation forecast and requirements for electrical energy feed-in to the electrical energy transmission system, and optimizes the revenue generation model using a mixed-integer linear programming approach.

An example embodiment of the method includes: obtaining a forecast of energy generation by a photovoltaic energy generation system for a predetermined time period; determining a linear revenue generation objective function describing revenue generated by feeding electrical energy from the photovoltaic energy generation and supply system into an energy transmission system; determining a plurality of linear constraints on the feeding of electrical energy into the energy transmission system, at least some of the constraints being a function of the forecast; optimizing the revenue generation function under the constraints to determine an energy feed-in action and an energy storage action; and executing the determined energy actions.

The formulation of the revenue generation model, including the revenue generation objective function and the plurality of constraints as linear functions, can enable the revenue generation objective function to be optimized using a mixed integer linear programming approach. In an example, the revenue generation objective function and plurality of constraints are provided to an optimization engine configured to implement a mixed integer linear programming approach, and an optimized solution of the revenue generation objective function in view of the plurality of constraints is received from the optimization engine.

In example embodiments, selected steps of the method are performed iteratively over a predetermined time period, so as to continually adapt to changing conditions. For example, in an example, the method performs, at each of a plurality of time intervals during the predetermined time period, one or more of: observing a current energy generation by the photovoltaic energy generation system, obtaining the energy generation forecast, determining the revenue generation objective function and the plurality of constraints, optimizing the revenue generation function, and executing the energy actions determined as a result of the optimization.

In example embodiments, the plurality of constraints include constraints power fed to the electrical energy transmission system during ramp-up, quasi-stationary, and ramp-down phases of the predetermined time period, such as one or more of: a limit on a rate of increase of power feed-in during the ramp-up phase, a limit on a variation of a power feed-in during the quasi-stationary phase, and a limit on a rate of decrease of power feed-in during the ramp-down phase. In example embodiments, the constraints also limit the order, length and/or frequency, etc., of these phases. The constraints can further enable the revenue generation model to implement physical characteristics and limitations of the photovoltaic energy generation and supply system.

Example embodiments of a non-transitory machine-readable storage medium include program instructions that, when executed by a processor, perform embodiments of the method of controlling the photovoltaic energy generation and supply system.

Example embodiments of a photovoltaic energy generation and supply system include a processor and a non-transitory machine-readable storage medium on which are stored program instructions that, when executed by a processor, cause the processor to perform example embodiments of the method of controlling the photovoltaic energy generation and supply system.

These and other features, aspects, and advantages of the present invention are described in the following detailed description in connection with certain exemplary embodiments and in view of the accompanying drawings, throughout which like characters represent like parts. However, the detailed description and the appended drawings describe and illustrate only particular example embodiments of the invention and are therefore not to be considered limiting of its scope, for the invention may encompass other equally effective embodiments.

## BRIEF DESCRIPTION OF THE DRAWINGS

FIG. 1 is a schematic diagram depicting an energy generation and transmission system according to an example embodiment of the present invention.

FIG. 2 is a schematic diagram depicting a photovoltaic energy generation and supply system according to an example embodiment of the present invention.

FIG. 3 is a schematic diagram depicting a photovoltaic energy generation system according to an example embodiment of the present invention.

FIG. 4 is a schematic diagram depicting an energy storage system according to an example embodiment of the present invention.

FIG. 5 is a schematic diagram depicting a monitoring and control system according to an example embodiment of the present invention.

FIG. 6 is a schematic diagram depicting an energy action determination module according to an example embodiment of the present invention.

FIG. 7 is a flowchart depicting a method of providing electrical energy from the photovoltaic energy and supply system to an electrical energy transmission system according to an example embodiment of the present invention.

FIG. 8 is a graph depicting electrical energy generated by the photovoltaic energy and supply system and electrical power fed into the electrical energy transmission system over a predetermined time period according to example embodiments of the present invention.

FIG. 9 is a flowchart depicting another embodiment f a method of providing electrical energy from the photovoltaic energy and supply system to an electrical energy transmission system according to an example embodiment of the present invention.

FIGS. 10A-10B are graphs depicting an electrical energy generation forecast for the photovoltaic energy and supply system, electrical power fed into the electrical energy transmission system, and an energy state of the energy storage module for an exemplary performance of the method of FIG. 7 according to example embodiments of the present invention.

FIGS. 11A-11B are graphs depicting an electrical energy generation forecast for the photovoltaic energy and supply system, electrical power fed into the electrical energy transmission system, and an energy state of the energy storage module for another exemplary performance of the method of FIG. 7 according to example embodiments of the present invention.

FIGS. 12A-12B are graphs depicting embodiments of an electrical energy generation forecast for the photovoltaic energy and supply system, electrical power fed into the electrical energy transmission system, and an energy state of the energy storage module for yet another exemplary performance of the method of FIG. 7 according to example embodiments of the present invention.

## DETAILED DESCRIPTION OF EXAMPLE EMBODIMENTS

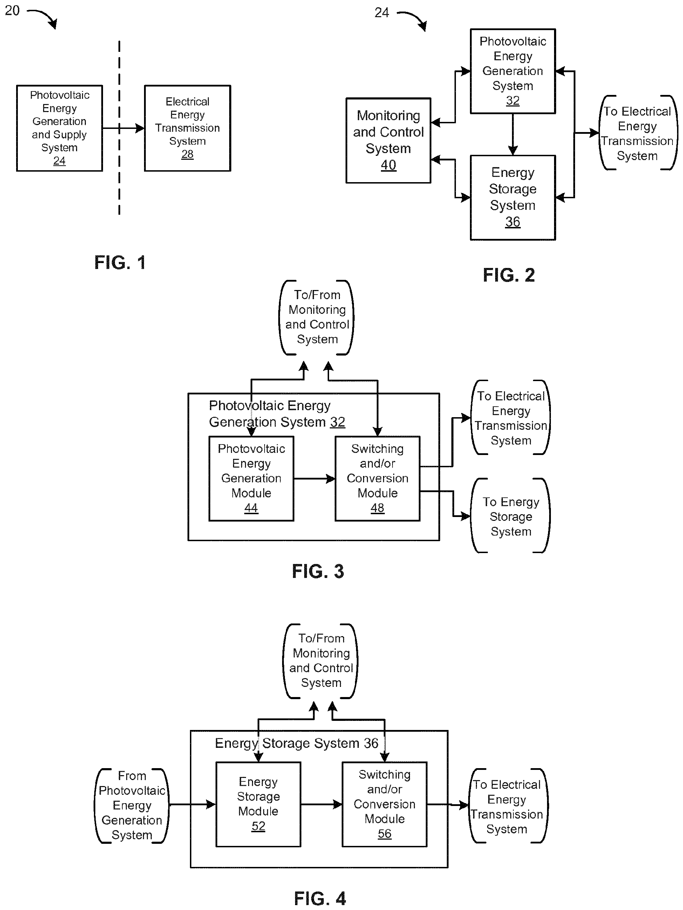

FIG. 1 depicts an example embodiment of an energy generation and transmission system 20. The illustrated energy generation and transmission system 20 includes a photovoltaic energy generation and supply system 24 and an electrical energy transmission system 28, where the photovoltaic energy generation and supply system 24 generates electrical energy from solar energy, and supplies electrical energy to the electrical energy transmission system 28. The electrical energy transmission system 28 receives electrical energy from the photovoltaic energy generation and supply system 24, and transmits the electrical energy to end users for consumption.

The photovoltaic energy generation and supply system 24 and the electrical energy transmission system 28 can each be owned, operated and/or located on the premises of different entities, such as corporations, public utilities, governmental bodies, etc. For example, the photovoltaic energy generation and supply system 24 can be owned, operated and/or located on the premises of a first entity, and the electrical energy transmission system 28 can be owned, operated and/or located on the premises of a second entity. The second entity can provide payments to the first entity for electrical energy supplied by the photovoltaic energy generation and supply system 24 to the electrical energy transmission system 28 that meets requirements for such transfer, but may provide only a reduced or no payment for electrical energy supplied that does not meet such requirements.

FIG. 2 depicts an example embodiment of the photovoltaic energy generation and supply system 24, including a photovoltaic energy generation system 32, an energy storage system 36, and a monitoring and control system 40. The photovoltaic energy generation system 32 receives solar energy from which it generates electrical energy. The photovoltaic energy generation system 32 is connected to, and is configured to supply electrical energy to, the energy storage system 36 and the electrical energy transmission system 28. The energy storage system 36 is configured to receive, store and provide electrical energy. The energy storage system 36 is connected to and receives energy from the photovoltaic energy generation system 32, and is connected to and provides energy to the electrical energy transmission system 28. The monitoring and control system 40 monitors components of the photovoltaic energy generation system 32 and energy storage system 36, and provides control signals to control these systems. For example, in an example, the monitoring and control system 40 is connected to the photovoltaic energy generation system 32 and energy storage system 36 to receive monitoring information from, and provide control signals to, these systems.

FIG. 3 depicts an example embodiment of the photovoltaic energy generation system 32. The example photovoltaic energy generation system 32 includes a photovoltaic energy generation module 44 and a switching and/or conversion module 48. The photovoltaic energy generation module 44 includes one or more components configured to receive solar energy power and convert the received solar energy power to electrical energy power, such as a direct current (DC) power in the form of one or more voltage or current output signals. The photovoltaic module 44 should be arranged in a location having favorable solar conditions.

The switching and/or conversion module 48 includes one or more switching and/or conversion components. For example, in an example, the one or more switching components control whether generated electrical energy is delivered from the photovoltaic energy generation module 44 to electrical energy transmission system 28, and whether generated electrical energy is delivered from the photovoltaic energy generation module 44 to the energy storage system 36, the control being in response to one or more control signals from the monitoring and control system 40. The switching component(s) include, for example, transistor-based switches, electromagnetic switches, mechanical switches, etc. In an example, the one or more conversion components provide conversion of energy from one form to another, such as from DC electrical energy to alternating current (AC) electrical energy, or vice versa, and/or from one voltage or current level to another, as may be required by the electrical energy transmission system 28 or the energy storage system 36, the conversion being in response to, e.g., one or more control signals from the monitoring and control system. In one example, the switching and/or conversion module 48 includes one or more inverters to convert a DC signal produced by the photovoltaic energy generation module to an AC signal, and one or more transformers to convert the AC signal to a higher voltage level, for delivery to the electrical energy transmission system 28. In another example, the switching and/or conversion module 48 includes one or more DC to DC converters to convert a DC signal produced by the photovoltaic energy generation module 44 to a second DC signal having a different voltage level for delivery to the energy storage system 36.

FIG. 4 depicts an example embodiment of the energy storage system 36 including an energy storage module 52 and a switching and/or conversion module 56, where the energy storage module 52 includes one or more components, such as one or more batteries, etc., that store electrical energy for later access, and the switching and/or conversion module 56 includes one or more switching and/or conversion components, similar to those described above with respect to the switching and/or conversion module 48. In an example, one or more switching components control whether electrical energy stored in the energy storage module 52 is delivered to the electrical energy transmission system 28 in response to one or more control signals from the monitoring and control system 40. In an example, one or more conversion components provide conversion of energy from one form to another, such as from DC electrical energy to alternating current (AC) electrical energy, or vice versa, and/or from one voltage or current level to another, as may be required by the electrical energy transmission system 28 or energy storage system 36, in response to, e.g., one or more control signals from the monitoring and control system 40. For example, in an example, the switching and/or conversion module 56 includes one or more inverters to convert a DC signal produced by the energy storage module 52 to an AC signal, and one or more transformers to convert the AC signal to a higher voltage level, for delivery to the electrical energy transmission system 28.

In example embodiments, the switching and/or conversion components 48, 56 of the photovoltaic energy generation system 32 and the energy storage system 36 may be are variously distributed across these systems, such as depicted in FIGS. 3 and 4, or wholly or partially consolidated into one of these systems and correspondingly omitted from the other system.

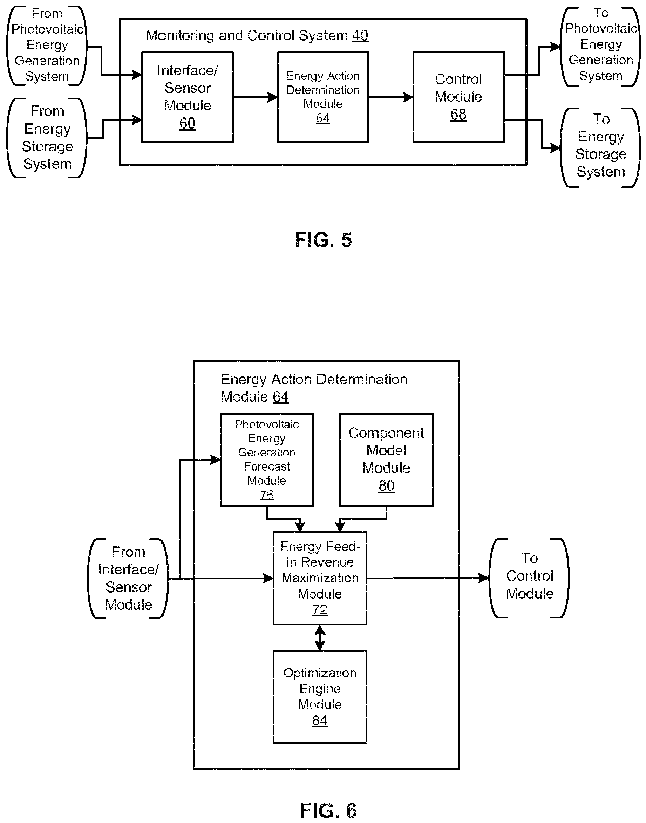

FIG. 5 depicts an example embodiment of the monitoring and control system 40, including an interface and/or sensor module 60, an energy action determination module 64, and a control module 68.

In an example, the interface and/or sensor module 60 includes one or more components to receive and/or sense a state of components of the photovoltaic energy generation system 32 and the energy storage system 36, such as an electrical energy power level generated by the photovoltaic energy generation module 44, a charge state of the energy storage module 52, etc. The interface and/or sensor module 60 can include either components to receive signals from sensors or the sensors themselves. Examples of the sensors include voltage level sensors, current level sensors, power level sensors, etc.

In an example, the energy action determination module 64 includes one or more components to receive sensed information outputs from the interface and/or sensor module 60 and determine a corresponding energy action for the photovoltaic energy generation system 32 and/or the energy storage system 36, such as selectively providing electrical power from the energy generation system 32 to the electrical energy transmission system 28 and/or to the energy storage system 36, and/or from the energy storage system 36 to the electrical energy transmission system 28, based on the received sensed information and other factors and functionality as discussed herein. In an example, the energy action determination module 64 provides an output signal to the control module indicating the determined energy actions.

In an example, the control module 68 provides control signals to components of the photovoltaic energy generation system 32 and/or energy storage system 36 to implement determined energy actions for these systems, such as to selectively control delivery of electrical energy from the photovoltaic energy generation system 32 to the electrical energy transmission system 28 and/or energy storage system 36, and/or from the energy storage system 36 to the electrical energy transmission system 28.

FIG. 6 depicts an example embodiment of the energy action determination module 64, including an energy feed-in revenue generation maximization module 72, a photovoltaic energy generation forecast module 76, a component model module 80, and an optimization engine module 84. For example, in example embodiments, the energy feed-in revenue generation maximization module 72 receives one more of sensed information from the interface and/or sensor module 60, forecast information from the photovoltaic energy generation forecast module 76, and model information from the component model module 80, and determines energy actions for the photovoltaic energy generation system 32 and energy storage system 36 to optimize revenue generated by providing electrical energy from the photovoltaic energy generation and supply system 24 to the electrical energy transmission system 28 for a predetermined planning horizon based on the received information. For example, in an example, the energy feed-in revenue generation maximization module 72 is configured to compose a revenue generation model including a linear revenue generation objective function and associated linear constraints, and optimize the composed revenue generation model using, e.g., a mixed integer linear programming approach, such as by providing the revenue generation model to the optimization engine module 84 and receiving an optimized solution from the optimization engine module 84 determining energy actions and associated system parameters. The energy feed-in revenue generation maximization module 72 is, for example, configured to output an indication of the determined energy actions to the control module 68.

In example embodiments, the photovoltaic energy generation forecast module 76 is configured to receive sensed information from the interface and/or sensor module 60 and provide a forecast of the photovoltaic energy generation for the predetermined planning horizon to the energy feed-in revenue generation maximization module 72 based on one or more of the received sensed information, stored historical energy generation forecast data, etc.

In example embodiments, the component model module 80 provides parameters characterizing components of the photovoltaic energy generation and supply system 24 to the energy feed-in revenue generation maximization module 72, such as charging and discharging efficiencies of the energy storage module 52, etc.

In example embodiments, the optimization engine module 84 is configured to receive the composed revenue generation model from the energy feed-in revenue maximization module 72, such as the revenue generation objective function and associated constraints, optimize the revenue generation model to maximize the revenue generation objection function in view of the associated constraints, and provide an optimized solution of the revenue generation model to the energy feed-in revenue maximization module 72, to determine corresponding energy actions and associated system control parameters of the optimized solution.

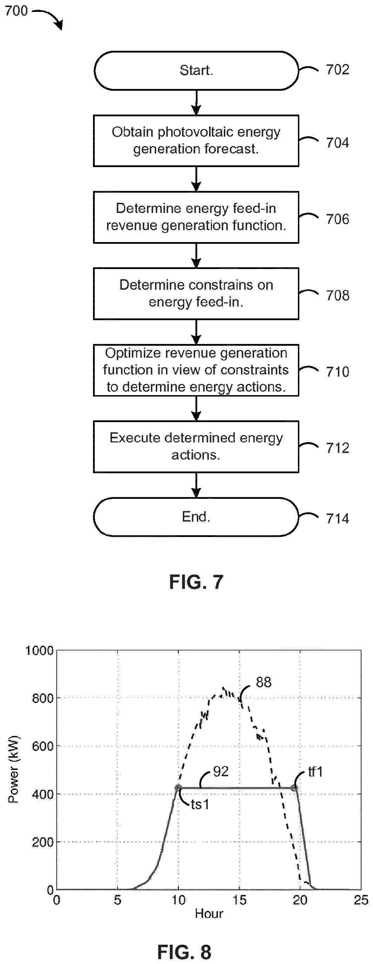

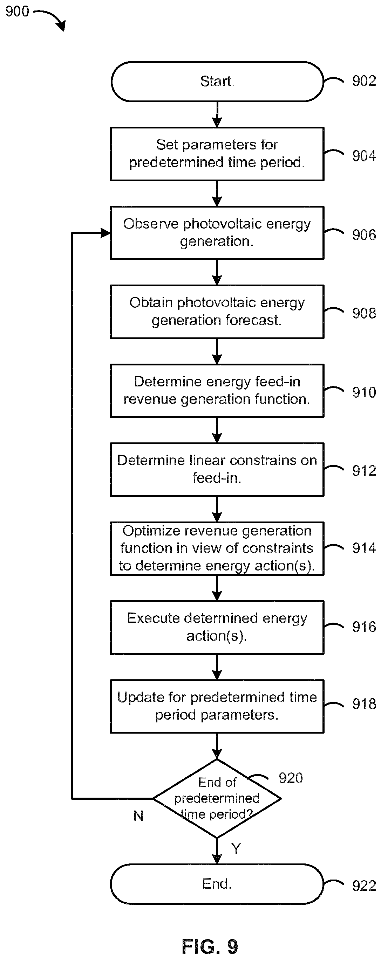

Components of the monitoring and control system 40 can be implemented as hardware, software, or a mixture of hardware and software. For example, components of the monitoring and control system 40, such as any individual one, subset, or all of the energy action determination module 64, interface and/or sensor module 60, and control module 68 can include a processor and a non-transitory storage medium, where the non-transitory storage medium includes program instructions, which when executed by the processor, cause the processor to perform embodiments of the functions of such components discussed herein, such as example embodiments of methods of feeding electrical energy from the photovoltaic energy generation and supply system 24 to the electrical energy transmission system 28 depicted in FIGS. 7 and 9 and discussed below.

Although FIGS. 1-6 depict embodiments of systems, modules and components of a photovoltaic energy generation and supply system 24, these systems, modules and components can also be used in connection with other types of renewable energy generation and supply systems, such as wind-based energy generation and supply systems, by replacing the photovoltaic energy generation module 44 with other types of renewable energy generation modules, such as wind-based energy generation modules.

FIG. 7 is a flowchart that illustrates a method of feeding electrical energy from the photovoltaic energy generation and supply system 24 to the electrical energy transmission system 28 so as to maximize revenue generated by the feed-in in an improved manner, according to an example embodiment of the present invention. In example embodiments, the method utilizes a simplified revenue generation model, based on a photovoltaic energy generation forecast for a predetermined planning horizon and requirements for the electrical energy feed-in, to provide improved revenue generation in a less complex and reduced cost manner. For example, in an example, the method composes a simplified revenue generation model having a linear revenue generation objective function and plurality of linear constraints, and optimizes the composed simplified revenue generation model using a mixed-integer linear programming approach.

The illustrated example method begins at step 702. At step 704, a forecast of energy generation by the photovoltaic energy generation system 32 for a predetermined time period is be obtained. The predetermined time period is, for example, a planning horizon for planning energy actions of the photovoltaic energy generation and supply system 24, such as, e.g., a one day period. The forecast of photovoltaic energy generation is obtained, for example, by the energy feed-in revenue maximization module 72 from the photovoltaic energy generation forecast module 76.

The method of FIG. 7 is implemented either statically or dynamically, the latter of which is also discussed further below in regard to FIG. 9, the forecast being obtained either at a selected time during the predetermined time period, such as at a beginning of the predetermined time period, in embodiments of a static implementation, or at a plurality of selected time intervals during the predetermined time period, in embodiments of a dynamic implementation.

FIG. 8 is a graph depicting exemplary embodiments of a forecast of energy generation 88 by the photovoltaic energy generation system 32 and an electrical power feed-in 92 by the photovoltaic energy generation and supply system 24 to the electrical energy transmission system 28. In FIG. 8, the forecast includes a predicted electrical energy generation at each of a plurality of time intervals during the predetermined time period. The predicted electrical energy generation can have a form aligned to solar energy conditions, such as minimum energy generation during the evening, e.g., at the beginning and ending of the predetermined time period, and a maximum during the day, e.g., in the middle of the predetermined time period.

Returning to FIG. 7, at step 706 of the illustrated example method, a revenue generation objective function representing revenue generated by feeding energy from the photovoltaic energy generation and supply system 24 to the electrical energy transmission system 28 over the predetermined time period is determined. To compose a simplified revenue generation model, the revenue generation objective function is, in an example embodiment, a linear function, which can enable the revenue generation model to be optimized using a mixed integer linear programming approach. In example embodiments, the revenue generation objective function can be represented as follows:

$$\text{maximize } \sum_{t=1}^{T} q_t \Delta t / 60 \qquad (1)$$

where $q_t$ is an electric power feed-in by the photovoltaic energy generation and supply system 24 to the electrical energy transmission system 28 for which an entity associated with the photovoltaic energy generation and supply system 24 is reimbursed by an entity associated with the electrical energy transmission system 28; $\Delta t$ is a time interval between times t-1 and t, such as between energy actions, during the predetermined time period, where $\Delta t$ can be expressed in units of time, e.g., minutes; T is a number of such time intervals in the predetermined time period, and 60 is a conversion factor to convert a unit of time of $\Delta t$, such as minutes, into a unit of time on which $q_t$ is based, such as, e.g., hours, although in other embodiments different conversion factors can be selected depending on the units of time on which $\Delta t$ and $q_t$ are based. That is, the revenue generation can be represented by a sum of an amount of reimbursed electrical power fed by the photovoltaic energy generation and supply system 24 into the electrical energy transmission system 28 for each of the time intervals making up the predetermined time period.

At step 708, a plurality of constraints on the revenue generation function are determined. To compose a simplified revenue generation model, the constraints can be linear constraints, again which can enable the revenue generation model to be optimized using a mixed integer linear programming approach.

In example embodiments, the plurality of constraints include at least some constraints based on requirements for the feeding of electrical energy from the photovoltaic energy generation and supply system 24 to the electrical energy transmission system 28 that must be satisfied in order for the operator of the photovoltaic energy generation and supply system 24 to receive payment for the energy feed-in.

In example embodiments, there can be three phases of the electrical energy feed-in during the predetermined time period, including a ramp-up phase, which is a period in which the electrical power feed-in can increase or stay the same; a quasi-stationary phase, which is a period during which the electrical power feed-in can vary only within predetermined limits; and a ramp-down phase, which is a period during which the electrical power feed-in can decrease or stay the same. In an example embodiment, a transition time *ts* at which the ramp-up phase transitions to the quasi-stationary phase and a transition time *tf* at which the quasi-stationary phase transitions to the ramp-down phase are announced by the photovoltaic energy generation and supply system 24 to the electrical energy transmission system 28 at a predetermined amount of time before they occur.

Returning to FIG. 8, the depicted electrical power feed-in has a ramp-up phase between the beginning of the predetermined time period and a first transition time *ts1,* a quasi-stationary phase between the first transition time *ts1* and a second transition time *tf1,* and a ramp-down phase between the second transition time *tf1* and the end of the predetermined time period.

In an example embodiment, each of these phases are required to satisfy rate or level limits. For example, in an example embodiment, during the ramp-up phase, the rate of increase of the level of the electrical power feed-in is limited to be below a predetermined rate of increase, such as a below a predetermined percentage of an allowed maximum electrical power feed-in level. A constraint based on this requirement can be represented as follows:

$$-M_1(1 - x_{t-1}) \leq P_t - P_{t-1} \leq 0.006\text{Pmax} + M_1(1 - x_{t-1}), \quad \forall t = 2 \dots T \quad (2),$$

where $M_1$ is a predetermined constant; $x_t$ is a binary variable at time t having a value of 1 if t is during the ramp-up phase and 0 otherwise; Pt is a pseudo power feed-in at time t, for which the constraints on power levels during the ramp-up, quasi-stationary and ramp-down phases are stated, and representing the actual power feed-in if these constraints are also satisfied by the actual-power feed in (as discussed further below, to enable an optimization of the revenue generation objective function even in circumstances where penalties are unavoidable, such as due to unfavorable weather conditions, so that actual power levels cannot satisfy these constraints, the power level requirements can instead be stated in terms of the pseudo power feed-in Pt, and the difference between this pseudo power feed-in and the actual-power feed-in can be tracked, and thus minimized, by performing a balancing of the pseudo power feed-in with the utilized generated photovoltaic power, the electrical power flowing into and out of the energy storage module, and a slack variable); Pmax is the maximum allowed power feed-in; and 0.006, i.e., 6%, is an exemplary predetermined percentage of the maximum allowed power feed-in, although in other embodiments different predetermined percentages can be selected. The M1 factor and xt can be utilized to effectively implement "if' and "or" functions, whereby constraint (2) can equate to a first equivalent constraint of $0 \leq Pt - Pt\text{-}1 \leq 0.006\text{Pmax}$ during the ramp-up phase, to implement the limit on the electrical power feed-in rate of increase during this phase, and a second equivalent constraint of $\text{-}M1 \leq Pt - Pt\text{-}1 \leq M_1$ during the other phases, where $M_1$ is chosen to have a relatively large value, such as much greater than 0.006Pmax, to effectively impose no meaningful constraint during these other phases.

During the quasi-stationary phase, the electrical power feed-in can be limited to be within a predetermined range, such as between a predetermined percentage of the maximum electrical power feed-in above a predetermined reference electrical power feed-in and a predetermined percentage of the maximum electrical power feed-in below the predetermined reference electrical power feed-in. A constraint based on this requirement cab be represented as follows:

$$-0.025Pmax - M_2(1 - y_t) \leq P_t - Pref \leq 0.025Pmax + M_2(1 - y_t), \quad \forall t - 1 \dots T (3)$$

where M2 is a predetermined constant; yt is a binary variable at time t having a value of 1 if t is during the quasi-stationary phase and 0 otherwise; Pt is the pseudo power feed-in at time t; Pref is the predetermined power feed-in reference value; and 0.025, i.e., 2.5%, is an exemplary predetermined percentage of the maximum allowable power feed-in above and below the predetermined power feed-in reference value, although in other embodiments different predetermined percentages can be selected. Similar to as with constraint (2), the M2 factor and yt can be utilized to effectively implement "if' and "or" functions, whereby constraint (3) equates to a first equivalent constraint of -0.025Pmax ≤ Pt - Pref ≤ 0.025Pmax during the quasi-stationary phase, to implement the limit on the electrical power feed-in level variability during this phase, and a second equivalent constraint of -M2 ≤ Pt - Pref ≤ M2 during the other phases, where M2 is chosen to have a relatively large value, such as much greater than 0.025Pmax, to effectively impose no meaningful constraint during these other phases.

During the ramp-down phase, the electrical power feed-in rate of decrease can be limited to be below a predetermined rate of decrease, such as a below a predetermined percentage of an allowed maximum electrical power feed-in. A constraint based on this requirement can be represented as follows:

$$-0.006 Pmax - M_3(1 - z_{t+1}) \leq P_t - P_{t-1} \leq M_3(1 - z_{t+1}), \quad \forall t = 2 \ldots .T \quad (4)$$

where M3 is a predetermined constant; zt is a binary variable at time t having a value of 1 if t is during the ramp-down phase and 0 otherwise; 0.006 is an exemplary predetermined percentage of the maximum allowable power feed-in, although in other embodiments different predetermined percentages can be selected; and Pt is the pseudo power feed-in at time t. Similar to as with constraints (2) and (3), the M3 factor and zt can be utilized to effectively implement "if' and "or" functions, whereby constraint (4) can equate to a first equivalent constraint of -0.006Pmax ≤ Pt - Pt-1 ≤ 0 during the ramp-down phase, to implement the limit on the electrical power feed-in rate of decrease during this phase, and a second equivalent constraint of -M3 ≤ Pt - Pt-1 ≤ M3 during the other phases, where M3 is chosen to have a relatively large value, such as much greater than 0.006Pmax, to effectively impose no meaningful constraint during these other phases.

In an example embodiment, the ramp-up, quasi-stationary, and ramp-down phases are required to appear in a predetermined order. For example, in an example, the ramp-up phase is required to occur first during the predetermined time period, the quasi-stationary phase is required to occur second during the predetermined time period, following the ramp-up period, and the ramp-down phase is required to occur third during the predetermined time period, following the quasi-stationary phase. In an example embodiment, the quasi stationary phase is also required to be of at least a predetermined length. Constraints based on these requirements can be represented as follows:

$$x_1 = 1 \quad (5)$$

$$z_T = 1 \quad (6)$$

$$x_t \geq x_{t+1,} \quad \forall_t = 1, \ldots, T - 1 \quad (7)$$

$$z_T \leq z_{t+1,} \quad \forall_t = 1, \ldots, T - 1 \quad (8)$$

$$x_t + y_t + z_t = 1 \quad (9)$$

$$\sum_{t=1}^{T} y_t \geq L, \quad \forall_t = 1, \ldots, T \quad (10)$$

where L is a predetermined time index length. That is, constraint (5) requires xt to be 1 at time 1, and thus the ramp-up phase to be first. Constraint (6) requires zt to be 1 at time T, and thus the ramp-down phase to be last. Constraint (7) requires xt to be decreasing as a function of t, and thus once the ramp-up phase has ended, i.e., xt has gone to 0, the ramp-up phase may not occur again. Constraint (8) requires zt to be increasing as a function of t, and thus once the ramp-down phase has begun, i.e., zt gone to 1, it may not end for the remainder of the predetermined time period. Constraint (9) limits the occurrence of only one of the ramp-up, quasi-stationary, and ramp-down phases at any given time t. Constraint (10) limits the quasi-stationary phase to have a length greater than the predetermined time index length L.

The transition times ts, tf at which the photovoltaic energy generation and supply system transitions from the ramp-up phase to the quasi-stationary phase, and from the quasi-stationary phase to the ramp-down phase, can be limited to occur only at predetermined times or time intervals. For example, transition times ts, tf can be limited to occur only at half hour or hour increments from the beginning of the predetermined time period or another selected starting time. Constraints based on this limitation can be represented as follows:

$$ts = \sum_{t=1}^{T} x_t \, \Delta t / 30, \quad \forall_t = 1, \ldots, T \qquad (11)$$

$$tf = \sum_{t=1}^{T} (x_t + y_t) \Delta t / 30, \quad \forall_t = 1, \ldots, T \qquad (12)$$

where ts and tf are limited to be integers, and 30 is a conversion factor to convert a unit of time of time of $\Delta t$, such as minutes, into integers representing half hour increments, although in other embodiments different conversion factors can be selected to produce other predetermined time intervals.

In example embodiments, the electrical power feed-in from the photovoltaic energy generation and supply system 24 to the electrical energy transmission system 28 at any given time is limited to be below the maximum power feed-in in the quasi-stationary phase, such as below the predetermined percentage of the maximum electrical power feed-in above the predetermined reference electrical power feed-in. A constraint based on this limitation can be represented as follows:

$$P_t \leq Pref + 0.025 Pmax, \quad \forall_t = 1, \ldots, T. \qquad (13)$$

where $P_t$ is the pseudo power feed-in at time t; Pref is the predetermined power feed-in reference value; and 0.025 is the exemplary predetermined percentage of the maximum allowable power feed-in above and below the predetermined power feed-in reference value, although in other embodiments different predetermined percentages can be selected.

In example embodiments, the predetermined reference value of the electrical power feed-in from the photovoltaic energy generation and supply system 24 to the electrical energy transmission system 28 is limited to be below a predetermined percentage of the maximum allowable power feed-in. A constraint based on this limitation may be represented as follows:

$$Pref \leq 0.4 Pmax; \qquad (14)$$

where Pref is the predetermined power feed-in reference value; 0.4, i.e., 40%, is an exemplary predetermined percentage, although in other embodiments different predetermined percentage can be selected; and Pmax is the maximum allowable power feed-in.

Penalties in the form of withheld payment for electrical energy feed-in can be imposed by an operator of the electrical energy transmission system 28 if requirements, such as those related to feed-in power levels during the ramp-up, quasi-stationary and ramp-down phases, are not met for any given time interval. To enable an optimization of the revenue generation objective function even in circumstances where penalties are unavoidable, such as due to unfavorable weather conditions, these requirements can be stated in terms of the pseudo power feed-in, and the difference between this pseudo power feed-in and the actual-power feed in can be tracked, and thus minimized, by performing a balancing of the pseudo power feed-in with the utilized generated photovoltaic power, the electrical power flowing into and out of the energy storage module, and a slack variable. A constraint that performs such a balancing may be expressed as follows:

$$P_t = E_t + PV_t + a_t, \quad \forall_t = 1, \ldots, T \qquad (15)$$

where $P_t$ is the pseudo power feed-in at time t; $E_t$ is a power flow at time t into or out of the terminals of the energy storage module 52; $PV_t$ is a utilized portion of the forecast power of the photovoltaic energy generation system 32 at time t; and $a_t$ is a slack variable to implement flow balance. The slack variable $a_t$ thus tracks the difference between the pseudo power feed-in and the actual electrical power feed-in, the actual electrical power feed-in being equal to $P_t$ - at.

The electrical power feed-in for which the operator of the photovoltaic energy generation and supply system 24 is paid can be limited to be less than or equal to the electrical power actually fed into the electrical energy transmission system 28 (for example, payment can be less than that corresponding to the actually fed-in power due to penalties incurred due to power level constraints not being satisfied). A constraint based on this limitation can be represented as follows:

$$q_t \leq P_t - a_t, \quad \forall_t = 1, \dots, T \qquad (16)$$

However, minor differences between the pseudo power feed-in and the actual electrical power feed-in can be ignored and not result in penalties. For example, differences between the pseudo power feed-in and the actual electrical power feed-in below a predetermined error level can be ignored. A set of constraints to implement this feature can be represented as follows:

$$a_t \leq \in + M_4(1 - k_t) \quad \forall_t = 1, \dots, T \qquad (17)$$

$$-a_t \leq \in - M_4(1 - k_t) \quad \forall_t = 1, \dots, T \qquad (18)$$

$$a_t \leq \in - M_4(1 - l_t + k_t) \quad \forall_t = 1, \dots, T \qquad (19)$$

$$-a_t \leq \in - M_4(l_t + k_t) \quad \forall_t = 1, \dots, T \qquad (20)$$

$$l_t + k_t \leq 1 \quad \forall_t = 1, \dots, T \qquad (21)$$

where $a_t$ is the slack variable representing the difference between the pseudo power Pt satisfying the constraints on the power levels during the ramp-up, quasi-stationary and ramp-down phases at time t; $\in$ is a predetermined error power level; $M_4$ is a predetermined constant; $k_t$ is a binary variable having a value of 1 at time t if $-\in \leq a_t \leq \in$ and 0 otherwise; $1_t$ is a binary variable having a value of 1 if $a_t \geq \in$ and 0 if $a_t \leq -\in$. That is, if M4 is chosen to be large, constraints (17)-(21) require kt to have a value of 1 at time t if $-\in \leq a_t \leq \in$ and 0 otherwise, and $1_t$ to have a value of 1 if $a_t \geq \in$ and 0 if $a_t \leq -\in$.
The penalty for not satisfying the constraints on the power levels during the ramp-up, quasi-stationary and ramp-down phases at time t can include forfeiture of payment for electrical energy feed-in for a predetermined number of time intervals. A constraint that implements this limitation can be represented as follows:

$$\sum_{j=t}^{j=t+D-1} q_j \leq M_5 k_t \quad \forall_t = 1, \dots, T \qquad (22)$$

where j is a time index; D is is the predetermined number of time intervals for which payment is forfeited; $q_j$ is an electrical power feed-in at time j for which reimbursement is received; $M_5$ is a predetermined constant; and kt is the binary variable having a value of 1 at time t if $-\in \leq a_t \leq \in$ and 0 otherwise. That is, when kt=1, the power level requirements have been met and no penalties have been incurred as a result of the power feed-in at time t, and constraint (22) effectively disappears if M5 is chosen to be a large number. When $k_t$=0, penalties have been incurred as a result of the power feed-in at time t, and constraint (22) effectively requires the reimbursed power feed-in $q_j$, which can take on a positive value or the value of zero, starting at the present time t and lasting for the predetermined number D of time intervals, to be set to zero.
The forecast generated power of the photovoltaic energy generation system 32 that is utilized at any given time can be limited to be less than the total forecast generated power of the photovoltaic energy generation system 32. A constraint based on this limitation can be represented as follows:

$$\mathrm{PV}_t \leq \overline{PV_t}, \quad \forall_t = 1, \dots, T \qquad (23)$$

where PVt is the utilized forecast generated power of the photovoltaic energy generation system 32 at time t, and $\overline{PV_t}$ is the total forecast generated power of the photovoltaic energy generation system 32 at time t.
In example embodiments, the plurality of constraints also include at least some constraints to ensure that an optimization of the revenue generation function corresponds to physical and other limitations of the photovoltaic energy generation and supply system 24.

It can occur that energy storage module 52 charges and discharges at less than perfect efficiency. Power flowing into terminals of the energy storage module 52 can be reduced by an efficiency factor as it is stored in the energy storage module 52. Similarly, power flowing out of terminals of the energy storage module 52 can be reduced from that withdrawn from the energy stored in the energy storage module 52 by another efficiency factor. A constraint based on these limitations can be represented as follows:

$$E_t = u_t^+ \eta_d - u_t^- / \eta_{c,} \quad \forall_t = 1, \dots, T. \tag{24}$$

where $E_t$ is the power flowing at the terminals of the energy storage module 52 at time t, $u_t^+$ is a discharging power flowing out of energy storage of the energy storage module 52 at time t, $u_t^-$ is a charging flowing into energy storage of the energy storage module 52 at time t, $\eta_d$ is a discharging efficiency factor, and $\eta_c$ is a charging efficiency factor.

The internal power of the energy storage module 52, that is, the power flowing into and out of the stored energy of the energy storage module 52, can be composed of a difference of the discharging internal power and the charging internal power. A constraint based on this limitation can be represented as follows:

$$u_t = u_t^+ - u_t^-, \quad \forall_t = 1, \dots, T. \tag{25}$$

where $u_t$ is the internal power of the energy storage module at time t, $u_t^+$ is the discharging internal power at time t, and $u_t^-$ is the charging internal power at time t. Both the discharging and charging internal powers can be positive in such a formulation.

The energy stored in the energy storage module 52 can be limited to be within a predetermined range of energy values for which the energy storage module 52 is configured for sustainable operation. For example, the energy stored in the energy storage module 52 can be limited to be above a predetermined minimum energy and below a predetermined maximum energy. A constraint based on this limitation can be represented as follows:

$$\underline{B} \leq S_0 - \sum_{j=1}^{t} u_j \, \Delta t / 60 \leq \overline{B}, \quad \forall_t = 1, \dots, T \tag{26}$$

where $\underline{B}$ is a predetermined minimum stored energy; So is a stored energy of the energy storage module 52 at time 0; $u_j$ is the internal power of the energy storage module 52 at a time j; $\Delta t$ is the time interval between energy actions during the predetermined time period; T is a number of such time intervals in the predetermined time period; 60 is an exemplary time unit conversion factor, although in other embodiments different time unit conversion factors may be selected; and $\overline{B}$ is a predetermined maximum stored energy.

The internal power of the energy storage module 52 can be limited to be within a predetermined range of power values. For example, the internal charging power can be limited to be below a predetermined maximum charging power and the internal discharging power may be limited to be below a predetermined maximum discharging power. A constraint based on this limitation can be represented as follows:

$$\underline{U} \leq u_t \leq \overline{U}; \quad \forall_t = 1, \dots, T. \tag{27}$$

Where $\underline{U}$ is a predetermined maximum charging power, ut is the internal power of the energy storage module 52 at a time t, and $\overline{U}$ predetermined maximum discharging power.

In examples of the above revenue generation function and constraints, the variables $k_t$, $l_t$, $x_t$, $y_t$, $z_t$ are binary; the variables $t_s$, $t_f$ are integers; the variables $q_t$, $p_t$, $PV_t$, $Pref$, $u_t^+$, $u_t^-$ are continuous and greater than zero; and other variables can be continuous.

In an example embodiment, the plurality constraints can include each of constraints (2)-(27). In other example embodiments, the plurality of constrains can include selected subsets of constraints (2)-(27).

Returning to FIG. 7, at step 710, the revenue generation function is optimized in view of the plurality of constraints, and energy actions are determined for implementing the optimized function. The formulation of the simplified revenue generation model, including the revenue generation objective function and the plurality of constraints as linear functions, and the variables as a mixture of continuous, integer, and/or binary variables, can enable the revenue generation objective function and constraints to be optimized using a mixed integer linear programming approach.

In an example embodiment, the revenue generation objective function and the plurality of constraints are provided to the optimization engine module 84, which then produces, e.g., using an optimization methodology, such as a mixed integer linear programming approach, an optimized solution of the revenue generation objective function in view of the plurality of constraints.

In example embodiments, the revenue generation function and plurality of constraints are provided to the optimization engine module in a format that the optimization engine module is configured to accept. For example, an existing mixed integer linear programming tool, such as the intlinprog function of MatLab software provided by MathWorks, Inc., can accept a linear objective function; one or more linear constraints in the form of linear equalities, linear inequalities, or bounds; and an identification of variables that are integers; and provide an optimization of the objective function in view of the constraints for integer values of the identified variables.

The optimized solution can include values of the variables of the revenue generation objective function and plurality of constraints corresponding to a maximization of the revenue generation objective function in view of the plurality of constraints, which can represent energy actions to implement the maximized revenue generation. For example, the optimized solution can include an actual electrical power to be fed into the electrical energy transmission system 28 at each time t, the electrical power that is to be supplied to or drawn from the energy storage module 52 at each time t, the transition time $t_s$ to transition between the ramp-up and quasi-stationary phases, and the transition time $t_f$ to transition between the quasi-stationary and ramp-down phases.

The optimized solution can also include values of other variables of interest of the maximized revenue generation objective function, such as the forecast electrical power generated by the photovoltaic energy generation system 32 that is to be utilized at each time t, the electrical energy feed-in for which reimbursement will be received at each time t, etc., which can be used in evaluating the effectiveness of the optimization, adjusting parameters of the optimization, etc.

At step 712, one or more of the determined energy actions can be executed to implement the optimized revenue generation. For example, at each time t of the predetermined time period, the determined actual electrical power feed-in, which can be fed into the electrical energy transmission system 28, can consist of a corresponding portion of the utilized forecast generated photovoltaic electrical energy at time t and a corresponding portion of electrical energy drawn from the electrical energy storage module 52 at time t, and any determined power to be supplied to the energy storage module 52 can be supplied. Additionally, if the transition time $t_s$ to transition between the ramp-up and quasi-stationary phases, or the transition time $t_f$ to transition between the quasi-stationary and ramp-down phases, is upcoming within a predetermined length of time at time t, the transition can be announced to the electrical energy transmission system. To implement the energy actions, the monitoring and control system 40 can issue corresponding control signals to components of the photovoltaic energy generation system 32 and energy storage system 36. At step 714, the method ends.

As indicated above, the method of FIG. 7 can be implemented either statically or dynamically. FIG. 9 depicts an example embodiment of the method of FIG. 7 in which one or more of the steps of the method are implemented at each of a plurality of selected time intervals during the predetermined time period.

The method begins at step 902. At step 904, parameters for dynamic execution of the method are initially set, such as in a storage component of the energy feed-in revenue maximization module. For example, one or more of a current time t, a current energy state of the energy storage module 52, etc. can be set. The current time t can be set to 0. The current energy state of the energy storage module 52 can be determined using the interface and/or sensor module 60 of the monitoring and control system 40 and set.

At step 906, a current energy generation by the photovoltaic energy generation system 32 is obtained. The energy generation by the photovoltaic energy generation system 32 can be determined using the interface and/or sensor module 60.

At step 908, a forecast of energy generation by the photovoltaic energy generation system 32 from the outlook at time t for the remainder of the predetermined time period is obtained. Step 908 can be performed similarly to as discussed above for static implementations of step 704 of method 700 of FIG. 7, except the photovoltaic energy generation forecast module 76 can utilize one or more of the current energy generation by the photovoltaic energy generation system 32 and previously realized energy generation, in addition to a weather forecast for the predetermined time period, historical energy generation data to provide the forecast, etc.

At steps 910 and 912, a revenue generation objective function and a plurality of constraints are determined, respectively, for time t. Steps 910 and 912 can performed in a same or similar way to as discussed above for steps 706 and 708, respectively, of the method 700 of FIG. 7, except that the revenue generation objective function and plurality of constraints can be modified to account for currently observed and past realized variable values. For example, the

forecast power generation $\overline{PV_t}$ of the photovoltaic energy generation system used in, e.g., constraint (23) can be composed of the realized power generation at past times, the observed power generation at the current time, and the forecast of energy generation by the photovoltaic energy generation system 32 from the outlook at time t for the remainder of the predetermined time period. If the transition times $t_s$ and $t_f$ have already been determined, they can be set to the determined values in corresponding constraints rather than remain as variables. Similarly, past values of the state of the energy storage system 52 can be incorporated in respective constraints.

At steps 914 and 916, the revenue generation objective function is optimized in view of the plurality of constraints to determine energy actions and the determined energy actions are executed, respectively, for time t. Steps 914 and 916 can performed in a same or similar way to as discussed above for steps 710 and 712, respectively, of the method 700 of FIG. 7.

At step 918, parameters for dynamic execution of the method are updated, such as in a storage component of the energy feed-in revenue maximization module 72. For example, the time t can be incremented.

At step 920, whether the end of the predetermined time period has been reached is determined. If the end of the predetermined time period has not yet been reached, the method proceeds back to step 906 for additional iteration(s) of the dynamic steps of the method, but if the end of the predetermined time period has been reached, the method proceeds to step 922, where the method ends.

Although embodiments of the methods 700, 900 of FIGS. 7 and 9 of feeding electrical energy from a photovoltaic energy generation and supply system to an electrical energy transmission system can be implemented using embodiments of the photovoltaic energy generation and supply system 24 depicted in FIGS. 1-6, such as discussed above, embodiments of these methods 700, 900 can also be used with energy generation systems and energy generation systems having configurations different from those of depicted in FIGS. 1-6.

Although FIGS. 7 and 9 depict embodiments of methods of feeding electrical energy from a photovoltaic energy generation and supply system to an electrical energy transmission system, embodiments of these methods 700, 900 can also be used to feed electrical energy from other types of renewable energy generation and supply systems, such as wind-based energy generation and supply systems, to electrical energy transmission systems, by replacing photovoltaic energy generation with other types of renewable energy generation, such as wind-based energy generation, in the steps of the methods.

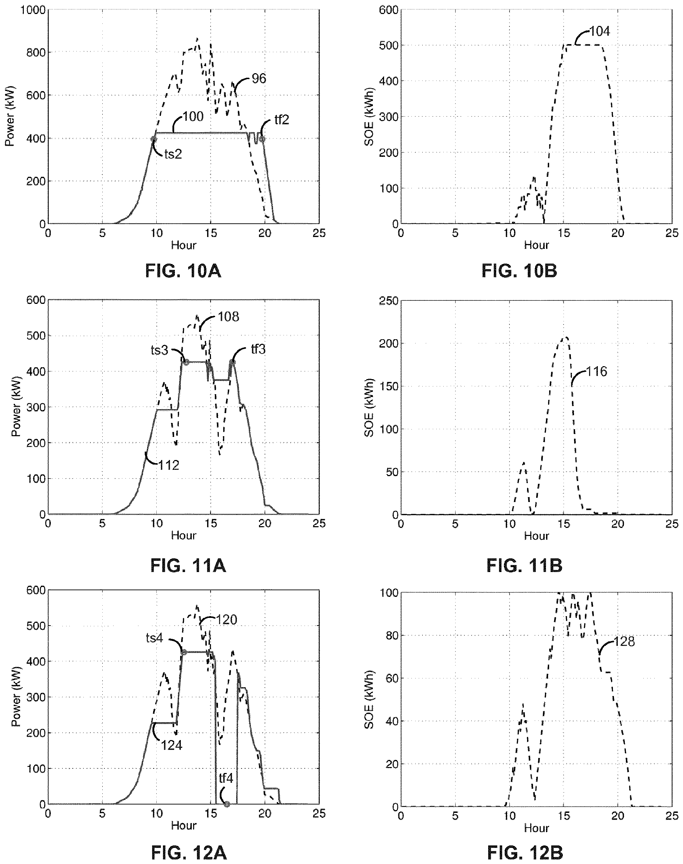

FIGS. 10A-10B, 11A-11B, and 12A-12B are graphs depicting forecast electrical energy generation by the photovoltaic energy generation system 32, actual electrical energy feed-in from the photovoltaic energy generation and supply system 24 to the electrical energy transmission system 28, and electrical energy storage produced by exemplary performances of embodiments of the method 700 of FIG. 7. FIGS. 10A-10B depict a forecast electrical power generation 96, an actual electrical power feed-in 100, transition times ts2, tf2, and a corresponding energy state 104 of the energy storage module 52, for a sunny day. The paid actual electrical energy feed-in can be calculated as 72.7% of the forecast generated power, significantly higher than in systems without an energy storage module or systems with other utilization of energy storage. FIGS. 11A-11B depicts a forecast electrical power generation 108, an actual electrical power feed-in 112, transition times ts3, tf3, and a corresponding energy state 116 of the energy storage module 52, for a cloudy day. The paid actual electrical energy feed-in can be calculated as 98.5% of the generated power, again significantly higher than for other systems. FIGS. 12A-12B depicts a forecast electrical power generation 120, an actual electrical power feed-in 124, transition times ts4, tf4, and a corresponding energy state 128 of the energy storage module 52, for a case where a penalty is unavoidably incurred due to varying weather conditions and energy storage module capacity, starting at hour 15.5 and ending at hour 17.5, but nonetheless again still resulting significantly higher paid feed-in percentage than for other systems.

An example embodiment of the present invention is directed to processing circuitry configured to perform the example methods described herein. In example embodiments, the processing circuitry, for example, includes one or more processors, which can be implemented using any conventional processing circuit and device or combination thereof, e.g., a Central Processing Unit (CPU) of a Personal Computer (PC) or other workstation processor, to execute code provided, e.g., on a non-transitory computer-readable medium including any conventional memory device, to perform the methods. The one or more processors can be embodied in a server or user terminal or combination thereof. The user terminal can be embodied, for example, as a desktop, laptop, hand-held device, Personal Digital Assistant (PDA), television set-top Internet appliance, mobile telephone, smart phone, etc., or as a combination of one or more thereof. The memory device can include any conventional permanent and/or temporary memory circuits or combination thereof, a non-exhaustive list of which includes Random Access Memory (RAM), Read Only Memory (ROM), Compact Disks (CD), Digital Versatile Disk (DVD), and magnetic tape.

An example embodiment of the present invention is directed to one or more non-transitory computer-readable media, e.g., as described above, on which are stored instructions that are executable by a processor and that, when executed by the processor, perform the method(s).

An example embodiment of the present invention is directed to a method, e.g., of a hardware component or machine, of transmitting instructions executable by a processor to perform the method(s).

The above description is intended to be illustrative, and not restrictive. Those skilled in the art can appreciate from the foregoing description that the present invention may be implemented in a variety of forms, and that the various embodiments can be implemented alone or in combination. Therefore, while the embodiments of the present invention have been described in connection with particular examples thereof, the true scope of the embodiments and/or methods of the present invention should not be so limited since other modifications will become apparent to the skilled practitioner upon a study of the drawings, specification, and the following claims.

For example, additional embodiments of the photovoltaic energy generation and supply system and methods of controlling the photovoltaic energy generation and supply system are possible. For example, any feature of any of the embodiments of the photovoltaic energy generation and supply system and methods of controlling the photovoltaic energy generation and supply system described herein can be used in any other embodiment of the photovoltaic energy generation and supply system and methods of controlling the photovoltaic energy generation and supply system. Also, embodiments of the photovoltaic energy generation and supply system and methods of controlling the photovoltaic energy generation and supply system can include only any subset of the components or features of the photovoltaic energy generation and supply system and methods of controlling the photovoltaic energy generation and supply system discussed herein.

**Claims**

1. A method of controlling a photovoltaic system that includes a photovoltaic energy generation system and an energy storage system, the method comprising:

   receiving, by processing circuitry, a forecast of energy generation by the photovoltaic energy generation system for a predetermined time period;
   determining, by the processing circuitry, a linear revenue generation objective function characterizing revenue generated by feeding electrical energy from the photovoltaic system to an energy transmission system;
   determining, by the processing circuitry, a plurality of linear constraints on the feeding of electrical energy into the energy transmission system, at least one of the plurality of constraints being a function of the forecast;
   optimizing, by the processing circuitry, the revenue generation objective function as constrained by the plurality of constraints to determine at least one energy feed-in action, for feeding electrical energy from the photovoltaic system into the energy transmission system, and at least one energy storage action, for controlling electrical energy in the energy storage system; and
   controlling, by the processing circuitry, components of the photovoltaic system to execute the determined energy feed-in action and energy storage action.

2. The method of claim 1, wherein determining the optimized solution includes maximizing the revenue generation function in view of the plurality of linear constraints using a mixed integer linear programming approach.

3. The method of claim 1, wherein the receiving the forecast, the determining the revenue generation objective function, the determining the plurality of constraints, the optimizing the revenue generation objective function in view of the plurality of constraints, and the executing of the determined energy feed-in and storage actions are each performed at each of a plurality of time intervals during the predetermined time period.

4. The method of claim 1, further comprising, at each of a plurality of predetermined time intervals during the predetermined time period, obtaining an indication of a current energy generation by the photovoltaic energy generation system.

5. The method of claim 4, wherein the forecast is based on the obtained current energy generation, a past energy generation by the photovoltaic energy generation system during the predetermined time period, and a past energy generation by the photovoltaic energy generation system during a previous predetermined time period.

6. The method of claim 1, wherein the plurality of linear constraints include at least one constraint limiting a rate of increase of power fed from the photovoltaic system to the energy transmission system.

7. The method of claim 1, wherein the plurality of linear constraints include at least one constraint limiting a variation of a power fed from the photovoltaic system to the energy transmission system

8. The method of claim 1, wherein the plurality of linear constraints include at least one constraint limiting a rate of decrease of power fed from the photovoltaic system to the energy transmission system.

9. The method of claim 1, wherein the plurality of linear constraints include at least one constraint requiring a quasi-stationary phase, having a quasi stationary amount of power fed from the photovoltaic system to the energy transmission system, to follow a ramp-up phase having an increasing amount of power fed from the photovoltaic system to the energy transmission system.

10. The method of claim 9, wherein the plurality of linear constraints include at least one constraint requiring a ramp-down phase, having a decreasing amount of power fed from the photovoltaic system to the energy transmission system, to follow the quasi-stationary phase.

11. The method of claim 1, wherein the plurality of linear constraints include at least one constraint limiting a maximum amount of power fed from the photovoltaic system to the energy transmission system.

12. A non-transitory machine-readable storage medium on which are stored program instructions that are executable by a processor and that, when executed by the processor, cause the processor to perform a method of controlling a photovoltaic system, the photovoltaic system including a photovoltaic energy generation system and an energy storage system, the method comprising:

   receiving a forecast of energy generation by the photovoltaic energy generation system for a predetermined time period;
   determining a linear revenue generation objective function characterizing revenue generated by feeding electrical energy from the photovoltaic system to an energy transmission system;
   determining a plurality of linear constraints on the feeding of electrical energy into the energy transmission system, at least one of the plurality of constraints being a function of the forecast;
   optimizing the revenue generation objective function as constrained by the plurality of constraints to determine at least one energy feed-in action for feeding electrical energy from the photovoltaic system into the energy transmission system, and at least one energy storage action for controlling electrical energy in the energy storage system; and
   controlling the photovoltaic system to execute the determined energy feed-in action and energy storage action.

13. The non-transitory machine-readable storage medium of claim 12, wherein determining the optimized solution includes maximizing the revenue generation function in view of the plurality of linear constraints using a mixed integer linear programming approach.

14. The non-transitory machine-readable storage medium of claim 12, wherein the receiving the forecast, the determining the revenue generation objective function, the determining the plurality of constraints, the optimizing the revenue generation objective function in view of the plurality of constraints, and the executing of the determined energy feed-in and storage actions are each performed at each of a plurality of time intervals during the predetermined time period.

15. The non-transitory machine-readable storage medium of claim 12, wherein the method further comprises, at each of a plurality of predetermined time intervals during the predetermined time period, obtaining an indication of a current energy generation by the photovoltaic energy generation system.

16. The non-transitory machine-readable storage medium of claim 15, wherein the forecast is based on the obtained current energy generation, a past energy generation by the photovoltaic energy generation system during the predetermined time period, and a past energy generation by the photovoltaic energy generation system during a previous predetermined time period.

17. A control device for controlling a photovoltaic system, the photovoltaic system including a photovoltaic energy generation system and an energy storage system, the control device comprising:

   processing circuitry; and
   an interface;
   wherein the processing circuitry is configured to:

      receive a forecast of energy generation by the photovoltaic energy generation system for a predetermined time period;

determine a linear revenue generation objective function characterizing revenue generated by feeding electrical energy from the photovoltaic system to an energy transmission system;

determine a plurality of linear constraints on the feeding of electrical energy into the energy transmission system, at least one of the plurality of constraints being a function of the forecast;

optimize the revenue generation objective function as constrained by the plurality of constraints to determine at least one energy feed-in action for feeding electrical energy from the photovoltaic system into the energy transmission system, and at least one energy storage action for controlling electrical energy in the energy storage system; and

control, via the interface, components of the photovoltaic system to execute the determined energy feed-in action and energy storage action.

18. The system of claim 17, wherein the determination of the optimized solution includes maximizing the revenue generation function in view of the plurality of linear constraints using a mixed integer linear programming approach.

19. The system of claim 17, wherein the processing circuitry is configured for the receipt of the forecast, the determination of the revenue generation objective function, the determination of the plurality of constraints, the optimization of the revenue generation objective function in view of the plurality of constraints, and the execution of the determined energy feed-in and storage actions to each be performed at each of a plurality of time intervals during the predetermined time period.

20. The system of claim 17, wherein:

the processing circuitry is further configured to, at each of a plurality of predetermined time intervals during the predetermined time period, obtain an indication of a current energy generation by the photovoltaic energy generation system; and

the forecast is based on the obtained current energy generation, a past energy generation by the photovoltaic energy generation system during the predetermined time period, and a past energy generation by the photovoltaic energy generation system during a previous predetermined time period.

20

Photovoltaic
Energy
Generation
and Supply
System
24

→

Electrical
Energy
Transmission
System
28

**FIG. 1**

24

Photovoltaic
Energy
Generation
System
32

Monitoring
and Control
System
40

Energy
Storage
System
36

To Electrical
Energy
Transmission
System

**FIG. 2**

To/From
Monitoring
and Control
System

Photovoltaic Energy
Generation System 32

Photovoltaic
Energy
Generation
Module
44

→

Switching
and/or
Conversion
Module
48

To Electrical
Energy
Transmission
System

To Energy
Storage
System

**FIG. 3**

To/From
Monitoring
and Control
System

Energy Storage System 36

From
Photovoltaic
Energy
Generation
System

→

Energy
Storage
Module
52

→

Switching
and/or
Conversion
Module
56

→

To Electrical
Energy
Transmission
System

**FIG. 4**

From
Photovoltaic
Energy
Generation
System

From
Energy
Storage
System

Monitoring and Control System 40

Interface/
Sensor
Module
60

Energy Action
Determination
Module
64

Control
Module
68

To
Photovoltaic
Energy
Generation
System

To
Energy
Storage
System

## FIG. 5

Energy Action Determination
Module 64

Photovoltaic
Energy
Generation
Forecast
Module
76

Component
Model
Module
80

From
Interface/
Sensor
Module

Energy Feed-
In Revenue
Maximization
Module
72

To
Control
Module

Optimization
Engine
Module
84

## FIG. 6

700

Start. ⟜ 702

↓

Obtain photovoltaic energy
generation forecast. ⟜ 704

↓

Determine energy feed-in
revenue generation function. ⟜ 706

↓

Determine constrains on
energy feed-in. ⟜ 708

↓

Optimize revenue generation
function in view of constraints
to determine energy actions. ⟜ 710

↓

Execute determined energy
actions. ⟜ 712

↓

End. ⟜ 714

**FIG. 7**

**FIG. 8**

900

```
        ┌─────────────────────────────┐
        │          Start.             │──  902
        └─────────────────────────────┘
                       │
                       ▼
        ┌─────────────────────────────┐
        │     Set parameters for      │──  904
        │  predetermined time period. │
        └─────────────────────────────┘
                       │
                       ▼
        ┌─────────────────────────────┐
        │  Observe photovoltaic energy│──  906
        │        generation.          │
        └─────────────────────────────┘
                       │
                       ▼
        ┌─────────────────────────────┐
        │   Obtain photovoltaic energy│──  908
        │     generation forecast.    │
        └─────────────────────────────┘
                       │
                       ▼
        ┌─────────────────────────────┐
        │  Determine energy feed-in   │──  910
        │ revenue generation function.│
        └─────────────────────────────┘
                       │
                       ▼
        ┌─────────────────────────────┐
        │ Determine linear constrains │──  912
        │         on feed-in.         │
        └─────────────────────────────┘
                       │
                       ▼
        ┌─────────────────────────────┐
        │ Optimize revenue generation │──  914
        │function in view of constraints│
        │ to determine energy action(s).│
        └─────────────────────────────┘
                       │
                       ▼
        ┌─────────────────────────────┐
        │  Execute determined energy  │──  916
        │         action(s).          │
        └─────────────────────────────┘
                       │
                       ▼
        ┌─────────────────────────────┐
        │ Update for predetermined time│── 918
        │      period parameters.     │
        └─────────────────────────────┘
                       │
                       ▼
                   ◇ End of ◇  ── 920
          N ──── predetermined
                 time period?
                       │ Y
                       ▼
        ┌─────────────────────────────┐
        │          End.               │──  922
        └─────────────────────────────┘
```

FIG. 9

FIG. 10A

FIG. 10B

FIG. 11A

FIG. 11B

FIG. 12A

FIG. 12B

Europäisches
Patentamt

European
Patent Office

Office européen
des brevets

# EUROPEAN SEARCH REPORT

Application Number

EP 17 18 6162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2013/268222 A1 (ARYA VIJAY [IN] ET AL) 10 October 2013 (2013-10-10)<br>* abstract *<br>* figures 2,3,7-10 *<br>* paragraphs [0031], [0041], [0042], [0046] *<br>----- | 1-8, 11-20<br>9,10 | INV.<br>H02J3/38<br>H02J3/28<br><br>ADD.<br>H02J3/32<br>H02S10/20 |
| A | US 2014/005845 A1 (THOMAS BEX GEORGE [US] ET AL) 2 January 2014 (2014-01-02)<br>* abstract *<br>* figures *<br>* paragraph [0051] - paragraph [0061] *<br>----- | 1-20 | |
| A | US 2013/190938 A1 (ZADEH MOHAMMAD REZA DADASH [CA] ET AL) 25 July 2013 (2013-07-25)<br>* abstract *<br>* figures *<br>* paragraph [0025] - paragraph [0052] *<br>----- | 1-20 | |
| A | CN 102 751 728 B (UNIV ZHEJIANG) 12 November 2014 (2014-11-12)<br>* the whole document *<br>----- | 1-20 | **TECHNICAL FIELDS SEARCHED (IPC)**<br><br>H02J |

The present search report has been drawn up for all claims

| Place of search | Date of completion of the search | Examiner |
|---|---|---|
| Munich | 10 January 2018 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 18 6162

This annex lists the patent family members relating to the patent documents cited in  the above-mentioned European search report.
The members are as contained in the European Patent Office EDP file on
The European Patent Office is in no way liable for these particulars which are merely given for the purpose of information.

10-01-2018

| Patent document cited in search report | Publication date | Patent family member(s) | Publication date |
|---|---|---|---|
| US 2013268222 A1 | 10-10-2013 | JP 5812310 B2<br>JP 2015515246 A<br>US 2013268222 A1<br>US 2013268463 A1<br>WO 2013150405 A1 | 11-11-2015<br>21-05-2015<br>10-10-2013<br>10-10-2013<br>10-10-2013 |
| US 2014005845 A1 | 02-01-2014 | NONE | |
| US 2013190938 A1 | 25-07-2013 | NONE | |
| CN 102751728 B | 12-11-2014 | NONE | |

EPO FORM P0459

For more details about this annex : see Official Journal of the European Patent Office, No. 12/82